# FASCICULE DE BREVET EUROPEEN

(11) **EP 0 680 127 B1**
(45) Date de publication et mention de la délivrance du brevet: **15.03.2000**
(21) Numéro de dépôt: 95400969.2
(22) Date de dépôt: 28.04.1995
(51) Int. Cl.: H02G 11/02

(54) **Dispositif d'enroulement d'un cordon électrique autour d'un boîtier d'appareil**
Wickelvorrichtung für elektrische Kabel um einem Aggegatgehäuse
Winding device for electrical wire around a unit housing

(30) Priorité: 29.04.1994 FR 9405274
(43) Date de publication de la demande: 02.11.1995
(73) Titulaire: MOULINEX S.A., 75008 Paris (FR)
(72) Inventeur: Leverrier, Bruno, 53100 Mayenne (FR); Marie, Armand, 53100 Mayenne (FR); Marriere, Marc, 53100 Mayenne (FR)
(74) Mandataire: Busquets, Jean-Pierre

(56) Documents cités:
- DE-A- 1 953 035
- DE-U- 9 011 786
- FR-A- 2 539 436
- US-A- 5 308 253
- US-A- 5 402 974

## Description

L'invention se rapporte à un dispositif d'enroulement d'un cordon d'alimentation électrique autour d'un boîtier d'appareil, ledit cordon ayant une extrémité solidaire du boîtier et une extrémité libre munie d'une fiche de courant et étant équipé d'un moyen de fixation de la fiche de courant en fin d'enroulement.

Le problème du rangement ou de l'enroulement du cordon d'alimentation autour d'un boîtier ou d'une partie d'un boîtier d'appareil, lorsqu'il n'est pas en service, s'est posé depuis longtemps. Une solution répandue consiste à prévoir un logement dans le boîtier de manière à recevoir en fin d'enroulement la fiche de courant. Une autre solution connue comporte une pince élastique montée coulissant sur le cordon ou solidaire de ce cordon et destinée à venir se fixer sur une région du cordon lors de la fin de l'enroulement.

Malheureusement, la première solution entraîne, non seulement, une augmentation du coût de production car il faut ménager un logement dans le boîtier, mais aussi une dégradation de l'esthétique de ce boîtier.

Quant à la seconde solution, elle s'avère, dans le temps, inefficace du fait de la perte d'élasticité de la pince, et surtout s'avère incommode dans le cas où l'enroulement est effectué de façon serrée autour de la partie concernée du boîtier. En effet, il est pratiquement impossible d'obtenir un pincement correct de la pince autour d'un des brins enroulés sans donner un certain mou à ce brin provoquant ainsi le relâchement général de l'enroulement. Ce dernier point est très préjudiciable notamment dans le cas où le boîtier présente une paroi latérale lisse, car, en perdant la tension de l'enroulement sur la paroi latérale, on perd également la retenue par friction des différents liens sur ladite paroi, ce qui entraîne le déroulement du cordon.

Le brevet DE-A-1 953 035 décrit un dispositif d'enroulement d'un cordon d'alimentation électrique autour du boîtier d'un appareil, ledit cordon ayant son extrémité libre munie d'une fiche de courant, et un moyen de fixation comportant une ventouse agencée à l'extrémité libre du cordon et adaptée à venir se fixer sur une région du boîtier présentant à cet effet une surface lisse.

Grâce à cette ventouse, on réalise un dispositif d'enroulement particulièrement simple et efficace qui maintient toujours en tension l'enroulement du cordon autour du boîtier, quelle que soit la façon d'enrouler ce cordon. En outre, ce dispositif d'enroulement est particulièrement intéressant pour les appareils dont le boîtier présente une esthétique pure à surface lisse, métallique ou plastique.

De façon à réduire l'encombrement du dispositif et améliorer l'esthétique de l'appareil lors de son rangement, l'invention propose que la ventouse, en fin d'enroulement, soit agencée orthogonalement à un plan fictif passant par les broches de la fiche de courant.

Les caractéristiques et avantages de l'invention ressortiront d'ailleurs de la description qui va suivre, à titre d'exemple, en référence aux dessins dans lesquels :
- la figure 1 représente en perspective une vue simplifiée d'un boîtier d'appareil illustrant un dispositif d'enroulement de cordon équipé d'une ventouse selon l'invention ;
- la figure 2 est une vue en élévation illustrant un tronçon de l'extrémité libre du cordon équipé d'une ventouse selon l'invention ;
- la figure 3 est une vue en bout selon la flèche F de la figure 2 ;
- la figure 4 est une vue de dessus de la fiche et de la ventouse illustrées à la figure 2 ;
- les figures 5 et 6 sont des variantes de réalisation de fiches équipées de ventouses selon l'invention ;
- la figures 7 est une vue en coupe selon la ligne 7-7 de la figure 5 ;
- la figure 8 est une vue de dessus de la fiche et de la ventouse illustrées sur la figure 5.

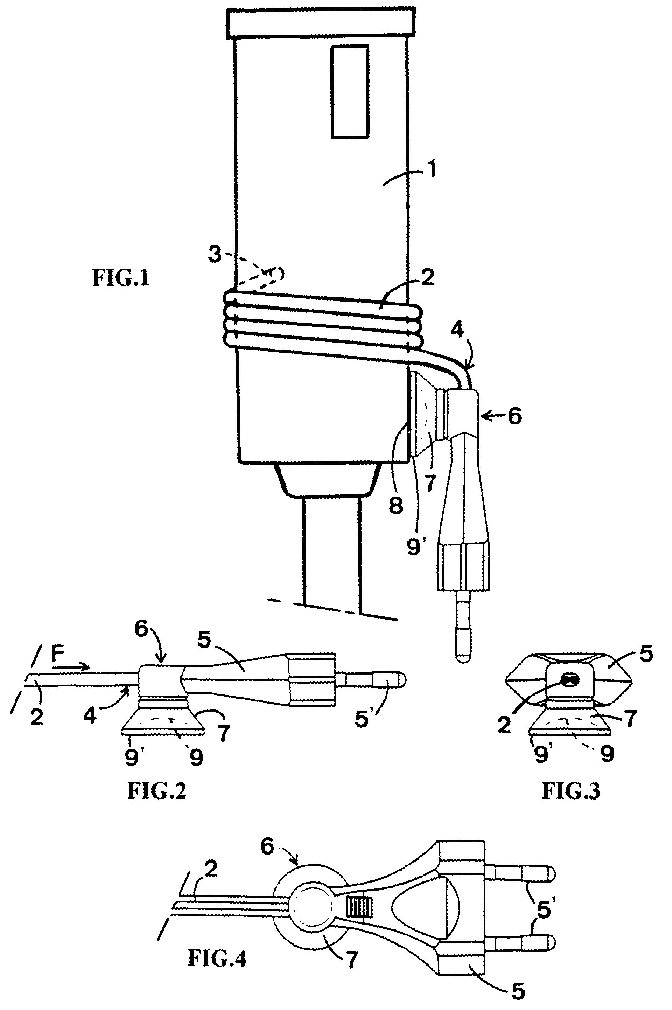

A la figure 1, on a représenté schématiquement un appareil électrique tel que, par exemple, un mixeur ménager dont le boîtier 1 présente, par exemple, une forme cylindrique, et qui comporte un cordon d'alimentation électrique 2 dont une extrémité 3 est solidaire du boîtier 1 et traverse la paroi latérale à travers un passe-fil, et dont l'autre extrémité (4) dite libre comporte une fiche de courant classique (5) présentant deux broches (5') situées dans un plan fictif médian au corps de la fiche 5 et passant par le cordon 2.

De manière à permettre le rangement du cordon d'alimentation 2, lorsque l'appareil n'est plus en service, l'invention prévoit d'équiper cet appareil d'un dispositif d'enroulement dudit cordon 2 autour du boîtier 1.

Ce dispositif d'enroulement comporte un moyen de fixation 6 de la fiche de courant 5 en fin d'enroulement qui comprend une ventouse 7 adaptée à venir se fixer sur une région 8 du boîtier 1 qui présente à cet effet une surface lisse permettant l'effet de ventouse. Bien entendu, le boîtier peut être réalisé en métal ou en plastique et peut présenter soit une surface totalement lisse, soit seulement une région lisse permettant à la ventouse de venir se fixer. La ventouse 7 peut être de type classique et comporte un corps en matériau souple, caoutchouc ou plastique, présentant en son centre une dépression 9 dont l'étendue est choisie de manière à s'associer à toute surface lisse pour créer l'effet ventouse. Bien entendu, on pourrait également utiliser un autre type de ventouse comportant de façon connue en soi un moyen mécanique (non représenté) de mise en succion.

De façon à bien illustrer l'invention, on a représenté aux figures 2, 5 et 6 des variantes de réalisations du moyen de fixation, et l'on a gardé les mêmes références pour désigner les pièces semblables telles que ventouse et fiche.

Selon une première réalisation illustrée aux figures 2, 3 et 4, la ventouse 7 est solidaire de la fiche 5, par exemple par moulage d'une seule pièce avec la fiche, et est agencée en l'extrémité opposée aux broches 5', orthogonalement au plan fictif passant par les deux broches 5', la dépression 9 présentant ainsi un bord 9' s'étendant dans un plan parallèle au plan fictif, ce qui réduit l'encombrement du dispositif et donc améliore l'esthétique de l'appareil lors de son rangement.

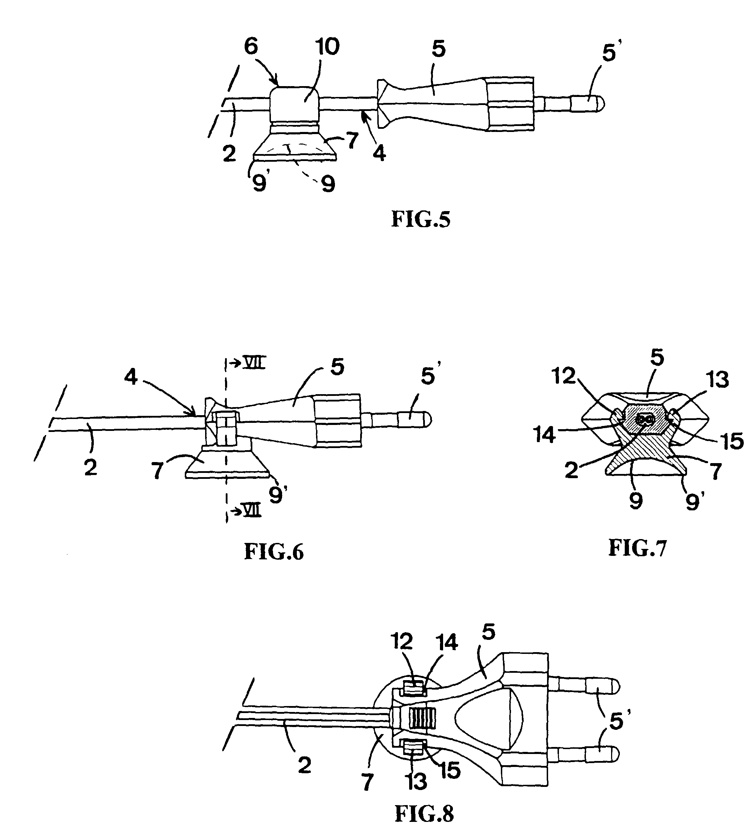

Selon une seconde réalisation illustrée à la figure 5, la ventouse 7 est solidaire d'un collier 10 monté coulissant à friction sur le cordon d'alimentation 2. Cette réalisation est très utile, par exemple, sur un boîtier 1 de forme parallélépipédique telle que celle par exemple d'un grille-pain, car elle permet de choisir de façon judicieuse la région de fixation, avant ou après une arête du boîtier de manière à garantir la meilleure tension de l'enroulement obtenue par friction entre le collier et le cordon.

Selon une troisième réalisation illustrée aux figures 6, 7 et 8, la ventouse 7 est montée amovible sur le corps de la fiche 5. A cet effet, la ventouse 7 comporte deux griffes 12 et 13 agencées à l'opposé de la dépression 9 et destinées à venir en prise respectivement avec deux crans 14 et 15 pratiqués dans le corps de la fiche 5. Ainsi cette ventouse est rendue amovible et peut être soit enlevée définitivement, soit changée lorsque sa capacité de succion s'est détériorée.

Ainsi quelle que soit la variante utilisée, on comprendra que l'on a réalisé un dispositif particulièrement simple et économique qui offre une grande commodité à l'utilisateur car il suffit d'enrouler le cordon d'alimentation sans précaution particulière autour du boîtier et d'appliquer en fin d'enroulement la ventouse soit sur n'importe quelle région du boîtier si celui-ci présente une surface lisse, soit sur une partie lisse ménagée sur une surface non lisse.

## Revendications

1. Dispositif d'enroulement d'un cordon d'alimentation électrique (2) autour d'un boîtier (1) d'un appareil, ledit cordon (2) ayant l'une (3) de ses extrémités solidaire du boîtier et une extrémité libre (4) munie d'une fiche de courant (5) et étant équipé d'un moyen de fixation de la fiche de courant en fin d'enroulement, ledit moyen de fixation comportant une ventouse (7) agencée à l'extrémité libre du cordon et adaptée à venir se fixer sur une région (8) du boîtier présentant à cet effet une surface lisse,
**caractérisé en ce que** la ventouse (7) est agencée orthogonalement à un plan fictif passant par les broches (5') de la fiche (5).

2. Dispositif d'enroulement selon la revendication 1,
**caractérisé ce que** la ventouse (7) est solidaire de la fiche de courant (5).

3. Dispositif d'enroulement selon la revendication 1,
**caractérisé en ce que** la ventouse (7) est solidaire d'un collier (10) monté coulissant à friction sur le cordon (2).

4. Dispositif d'enroulement selon la revendication 1,
**caractérisé en ce que** la ventouse (7) est montée amovible sur la fiche (5).

5. Dispositif d'enroulement selon la revendication 4,
**caractérisé en ce que** la ventouse (7) comporte deux griffes (12 et 13) destinées à venir respectivement en prise avec deux crans (14 et 15) pratiqués dans la fiche (5).

6. Dispositif d'enroulement selon l'une quelconque des revendications précédentes,
**caractérisé en ce que** la ventouse (7) comporte un moyen mécanique de mise en dépression.

## Claims

1. Device for coiling an electrical supply lead (2) around the casing (1) of an apparatus, said lead (2) having one (3) of its ends fixed to the casing and a free end (4) provided with a plug (5) and being equipped with a means of fixing the plug at the end of the coiling, said fixing means comprising a sucker (7) arranged at the free end of the lead and adapted to be fixed to a region (8) of the housing having a smooth surface for this purpose, characterised in that the sucker (7) is arranged orthogonally to a notional plane passing through the pins (5') of the plug (5).

2. Coiling device according to claim 1, characterised in that the sucker (7) is fixed to the plug (5).

3. Coiling device according to claim 1, characterised in that the sucker (7) is fixed to a collar (10) mounted for sliding on the lead (2) with friction.

4. Coiling device according to claim 1, characterised in that the sucker (7) is mounted removably on the plug (5).

5. Coiling device according to claim 4, characterised in that the sucker (7) has two claws (12 and 13) intended to come respectively into engagement with two notches (14 and 15) formed in the plug (5).

6. Coiling device according to anyone of the preceding claims, characterised in that the sucker (7) has a mechanical depressurising means.

## Patentansprüche

1. Vorrichtung zum Aufwickeln eines Elektrokabels (2) um ein Gehäuse (1) eines Gerätes, wobei das Kabel (2) ein am Gehäuse befestigtes Ende (3) und ein freies mit einem Stromstekker (5) ausgerüstetes Ende (4) aufweist und mit einem Element zum Befestigen des Stromsteckers nach dem Aufwickeln ausgestattet ist, wobei das Befestigungselement einen am freien Ende des Kabels angeordneten Saugnapf (7) aufweist, der an einem Bereich (8) des Gehäuses befestigt wird, der zu diesem Zweck eine glatte Oberfläche aufweist,
**dadurch gekennzeichnet, daß** der Saugnapf (7) senkrecht zu einer fiktiven Ebene angeordnet ist, die durch die beiden Kontaktstifte (5') des Steckers (5) geht.

2. Aufwickelvorrichtung nach Anspruch 1, **dadurch gekennzeichnet, daß** der Saugnapf (7) fest mit dem Stromstecker (5) verbunden ist.

3. Aufwickelvorrichtung nach Anspruch 1, **dadurch gekennzeichnet, daß** der Saugnapf (7) fest mit einem auf dem Kabel reibend verschiebbar montierten Ring (10) verbunden ist.

4. Aufwickelvorrichtung nach Anspruch 1, **dadurch gekennzeichnet, daß** der Saugnapf (7) abnehmbar auf dem Stecker (5) montiert ist.

5. Aufwickelvorrichtung nach Anspruch 4, **dadurch gekennzeichnet, daß** der Saugnapf (7) zwei Klauen (12 und 13) aufweist, die jeweils mit zwei am Stecker (5) ausgebildeten Rasten (14 und 15) in Eingriff kommen.

6. Aufwickelvorrichtung nach einem der vorhergehenden Ansprüche, **dadurch gekennzeichnet, daß** der Saugnapf (7) eine mechanische Vorrichtung aufweist, die Unterdruck erzeugt.
